# EUROPEAN PATENT APPLICATION

(11) **EP 2 713 285 A1**
(43) Date of publication of application: **02.04.2014**
(21) Application number: 12814338.5
(22) Date of filing: 11.07.2012
(51) Int. Cl.: G06F 17/30

(54) **INFORMATION PROCESSING APPARATUS, INFORMATION PROCESSING METHOD, AND PROGRAM**

(30) Priority: 19.07.2011 JP 2011157852
(71) Applicant: Sony Corporation, Tokyo 108-0075 (JP)
(72) Inventor: OONUMA Kensuke, Tokyo 108-0075 (JP)
(74) Representative: Berryman, Robert Jan
(86) International application number: PCT/JP2012/067715
(87) International publication number: WO 2013/011896

(57) **Abstract**

The present technology relates to an information processing apparatus, an information processing method, and a program allowing a user to access a reference document or the like written inside an electronic document by only clicking on a description of the reference document. A storing unit that stores information of an electronic document, an extraction unit that extracts a sentence including the information stored in the storing unit from a predetermined electronic document, and a generation unit that generates a link to the information stored in the storing unit from the sentence extracted by the extraction unit are provided. Even in a case where the electronic document is a document that is formed as the electronic document through scanning, when the degree of matching between the sentence included in the electronic document and the information stored in the storing unit is high, the sentence and the information are associated with each other, and a link is established. The present technology can be applied to a terminal handling electronic books.

## Description

### TECHNICAL FIELD

The present technology relates to an information processing apparatus, an information processing method, and a program and, more particularly, to an information processing apparatus, an information processing method, and a program detecting information relating to a literary work inside an electronic document, presenting the detected information to a user, and presenting additional information of the literary work.

### BACKGROUND ART

Instead of conventional paper-medium books, in recent years, books called electronic books that can be read on displays of electronic apparatuses are widely used. In such electronic books, services that cannot be provided for paper-medium books can be provided. For example, there are books that provide video or sounds.

In Patent Document 1, it has been proposed to present a user with unique content or information relating to a book through a network. In addition, in Patent Documents 2 and 3, it has been proposed to edit a link inside an electronic book.

### CITATION LIST

### PATENT DOCUMENT

Patent Document 1: JP 2009-015647 A
Patent Document 2: JP 2010-086151 A
Patent Document 3: JP 2000-181931 A

### SUMMARY OF THE INVENTION

### PROBLEMS TO BE SOLVED BY THE INVENTION

As described above, electronic books can provide services that cannot be provided by paper-medium books and the like, and accordingly, improvements in the quality of services and the like are desirable.

The present technology is contrived in consideration of such situations and is capable of detecting information of a literary work written in an electronic document and providing additional information other than the information for a user.

### SOLUTIONS TO PROBLEMS

An information processing apparatus according to one aspect of the present technology includes: a storing unit that stores information of an electronic document; an extraction unit that extracts a sentence including the information stored in the storing unit from a predetermined electronic document; and a generation unit that generates a link to the information stored in the storing unit from the sentence extracted by the extraction unit.

The storing unit may include a first storing unit in which the information of the electronic document stored in the same terminal is stored and a second storing unit in which the information of the electronic document stored in the other terminal is stored, and the extraction unit may extract a sentence including the information stored in the first storing unit from a predetermined electronic document and extracts a sentence including the information stored in the second storing unit from a predetermined electronic document.

The electronic document may be acquired by digitizing a document that is printed on a paper medium.

The extraction unit may calculate a first degree of similarity between a predetermined sentence included inside the electronic document and the information stored in the storing unit, calculate a second degree of similarity between a sentence acquired by combining the predetermined sentence and a sentence next to the predetermined sentence and the information stored in the storing unit, repeatedly perform the combining of sentences and the calculating of the degree of similarity until the second degree of similarity is determined to be higher than the first degree of similarity, and set the sentence before the combination as an extraction result when the second degree of similarity is determined to be lower than the first degree of similarity.

The extraction unit may further extract a number making reference to the extracted sentence from the predetermined electronic document, and the generation unit may give the link generated for the sentence that is referred to by the number to the number extracted by the extraction unit.

An update process may be performed by extracting a sentence including updated information from the predetermined electronic document in a case where storing unit is updated.

An information processing method according to one aspect of the present technology uses an information processing apparatus equipped with a storing unit that stores information of an electronic document, the information processing method including: extracting a sentence including the information stored in the storing unit from a predetermined electronic document; and generating a link to the information stored in the storing unit from the extracted sentence.

A computer-readable program according to one aspect of the present technology causes a computer that controls an information processing apparatus equipped with a storing unit storing information of an electronic document to perform: extracting a sentence including the information stored in the storing unit from a predetermined electronic document; and generating a link to the information stored in the storing unit from the extracted sentence.

In the information processing apparatus, the information processing method, and the program according to an aspect of the present technology, the information of an electronic document is stored, and a sentence including the stored information is extracted from a predetermined electronic document. In a case where a sentence is extracted from the electronic document, the sentence, information included in the sentence, and the information stored in the storing unit can be associated with each other. The associating of the sentence and the information with each other is performed by establishing a link accessing to the information from the sentence.

### EFFECTS OF THE INVENTION

According to an aspect of the present technology, information of a literary work written in an electronic document can be detected. In addition, additional information other than the detected information can be provided for a user, and the quality and the usability of services relating to an electronic document can be improved.

### BRIEF DESCRIPTION OF DRAWINGS

Fig. 1 is a diagram that illustrates the configuration of an embodiment of a system according to the present technology.
Fig. 2 is a diagram that illustrates an example of a document.
Fig. 3 is a diagram that illustrates an example of data included in a literary work database.
Fig. 4 is a diagram that illustrates a screen transition that is based on a link generated inside an electronic document.
Fig. 5 is a diagram that illustrates a screen transition that is based on a link generated inside an electronic document.
Fig. 6 is a diagram that illustrates a screen transition that is based on a link generated inside an electronic document.
Fig. 7 is a diagram that illustrates a screen transition that is based on a link generated inside an electronic document.
Fig. 8 is a flowchart that illustrates a process for generating a link inside an electronic document.
Fig. 9 is an example of data in a case where a link is embedded in data of an electronic document.
Fig. 10 is an example of data in a case where a link is embedded in data of an electronic document.
Fig. 11 is a flowchart that illustrates a literary work searching process.
Fig. 12 is a flowchart that illustrates a process performed when an electronic document is displayed.
Fig. 13 is a flowchart that illustrates a process performed when a link is selected.
Fig. 14 is a diagram that illustrates a reference number.
Fig. 15 is a diagram that illustrates a screen transition that is based on a link generated inside an electronic document.
Fig. 16 is an example of data in a case where a link is embedded in data of an electronic document.
Fig. 17 is a flowchart that illustrates an intra-document link detecting process.
Fig. 18 is a flowchart that illustrates an update process.
Fig. 19 is a flowchart that illustrates an update process.
Fig. 20 is a flowchart that illustrates a recording medium.

### MODE FOR CARRYING OUT THE INVENTION

Hereinafter, embodiments of the present technology will be described with reference to the drawings.

### [Configuration of System According to Present Technology]

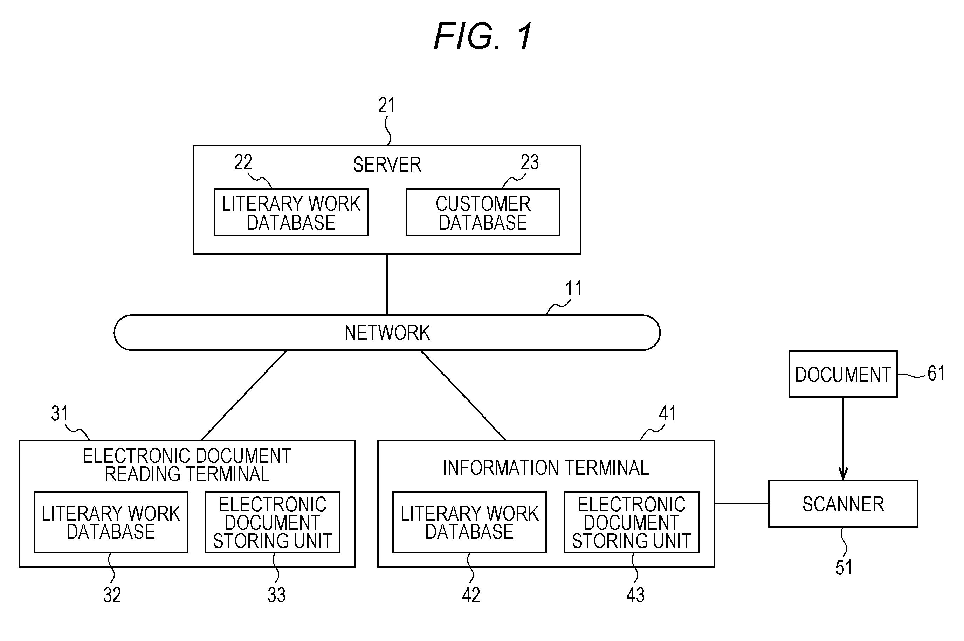

Fig. 1 is a diagram that illustrates the configuration of an embodiment of a system according to the present technology. The system illustrated in Fig. 1 is configured to include: a network 11; a server 21; an electronic document reading terminal 31; an information terminal 41; and a scanner 51. The server 21, the electronic document reading terminal 31, and the information terminal 41 are connected to the network 11 so as to configure to transmit and receive data. The scanner 51 is connected to the information terminal 41, and data read by the scanner 51 is configured to be supplied to the information terminal 41.

The server 21 is equipped with a literary work database 22 and a customer database 23. The server 21 may be configured by a personal computer or the like. The literary work database 22, which will be described in detail later, is a database that is used for managing information relating to a literary work such as the title of the work, the author name, and the publication company that are information used for uniquely specifying a predetermined literary work.

The customer database 23 is arranged for a case where a purchase is necessary when data managed by the literary work database 22 is read or the like and is a database that is used for managing information used for specifying a person.

The electronic document reading terminal 31 is equipped with a literary work database 32 and an electronic document storing unit 33. The electronic document reading terminal 31 is a terminal capable of reading an electronic document. The electronic document reading terminal 31 may be a terminal dedicated for reading an electronic document or a terminal such as a cellular phone. The literary work database 32 included in the electronic document reading terminal 31 basically has the same configuration as that of the literary work database 22 included in the server 21. The electronic document storing unit 33 stores an electronic document. In this electronic document storing unit 33, an electronic book (electronic document) that is purchased from another device such as the server 21 through the network 11, a document that is captured by the scanner 51, or the like is stored.

The literary work database 32 included in the electronic document reading terminal 31 manages data relating to an electronic document that is stored in the electronic document reading terminal 31. While the literary work database 22 of the server 21 and the literary work database 32 of the electronic document reading terminal 31 have the same data structure, contents of data stored therein are different from each other.

The information terminal 41 is equipped with a literary work database 42 and an electronic document storing unit 43. The information terminal 41 is configured by a personal computer or the like. The literary work database 42 included in the information terminal 41 basically has the same configuration as that of the literary work database 22 included in the server 21. The electronic document storing unit 43 stores an electronic document. In this electronic document storing unit 43, an electronic book that is purchased from another device such as the server 21 through the network 11, a document that is captured by the scanner 51, or the like is stored. Here, the description will be continued with a document 61 captured by the scanner 51 being assumed to be stored in the electronic document storing unit 43 as an electronic document.

The literary work database 42 included in the information terminal 41 manages data relating to an electronic document that is stored in the information terminal 41. While the literary work database 22 of the server 21 and the literary work database 42 of the information terminal 41 have the same data structure, contents of data stored therein are different from each other.

By the system illustrated in Fig. 1, the image of the document 61 is captured by the scanner 51, and the captured data is supplied to the information terminal 41 connected thereto. The information terminal 41 generates an electronic document that is acquired by digitizing the document 61 based on the image captured by the scanner 51. In addition, the information terminal 41 can acquire written character information from the image of the document 61 using a technology of optical character recognition (OCR) or the like and generate an electronic document including the character information.

When being connected to the electronic document reading terminal 31 through a USB or the like or through the network 11, the information terminal 41 copies or moves the electronic document stored in the electronic document storing unit 43 to the electronic document storing unit 33 of the electronic document reading terminal 31. In the electronic document storing unit 33 of the electronic document reading terminal 31, the electronic document acquired in this way is stored.

The information terminal 41 is configured to be able to acquire not only the document 61 but also music data acquired from a compact disc (CD) or the like, store the data, and supply the stored data to the electronic document reading terminal 31. The information of literary works such as the electronic document and the music data transmitted to the electronic document reading terminal 31 is managed by each of the literary work database 32 of the electronic document reading terminal 31 and the literary work database 42 of the information terminal 41. As will be described later, based on the information stored in this literary work database 32 (the literary work database 42), for example, the title of a literary work written in the electronic document is linked, and new information is acquired from the link destination thereof.

In addition, the electronic document reading terminal 31 has a function of being connected to the network 11 and can acquire and read a literary work managed by another device on the network 11 by being connected to the literary work database 22 inside the server 21 that is disposed on the network 11. In a case where a purchase is necessary for reading a literary work stored in the literary work database 22, the customer database 23 may be managed inside the server 21 so as to perform an accounting process.

### [Electronic Document]

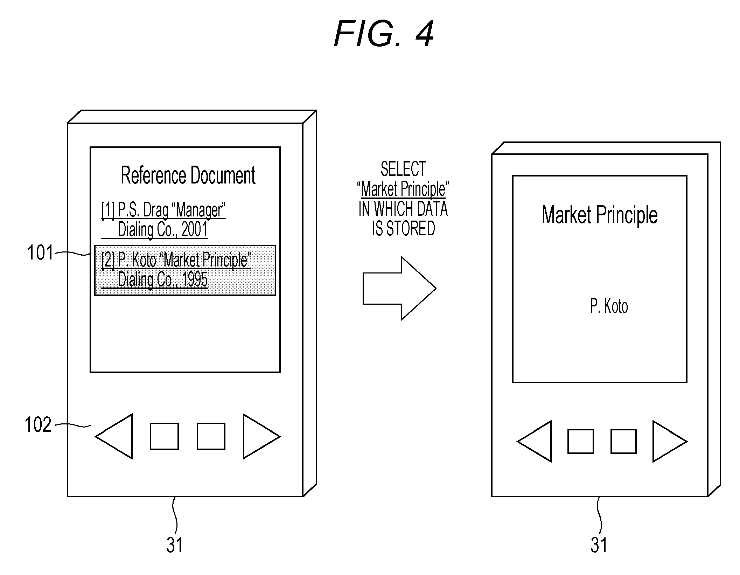

Next, an electronic document will be described which is stored in the electronic document storing unit 33 of the electronic document reading terminal 31, is displayed on a display unit 101 (Fig. 4) of the electronic document reading terminal 31, and is read by a user. This electronic document is an electronic document that is read, for example, from a paper-medium book by the scanner 51 and is stored in the electronic document storing unit 43.

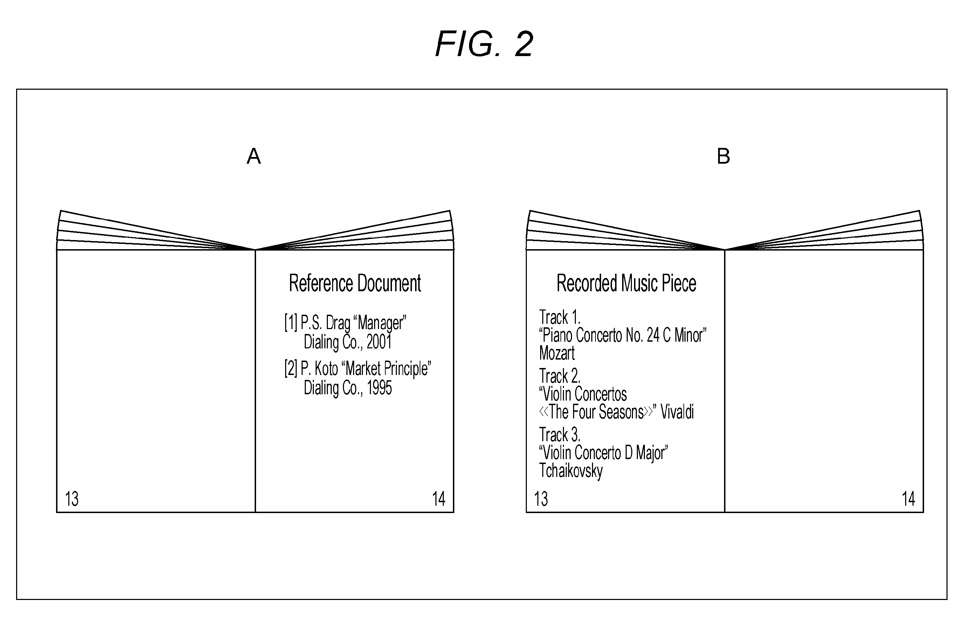

Fig. 2 is a diagram that illustrates an example of the document 61. The document 61 illustrated in Fig. 2 is an example (an example of a page) of a document that is a target to be linked in the description presented below. A of Fig. 2 illustrates a book such as a reference book, and B of Fig. 2 illustrates a music booklet (liner notes) that is attached to a music CD or the like. Referring to A of Fig. 2, for example, in a book such as a reference book or the like, there is a page on which a list of reference documents is written. In addition, on the final page of a chapter or the like, there is a case in which such reference documents are written or the like. In a document illustrated in A of Fig. 2, an example of such a page is represented, and, below the description of "reference documents", there are descriptions of "[1] P.S. Drag "Manager" Dialing Co., 2001" and "[2] P. Koto "Market Principle" Dialing Co., 1995".

As above, in each document written as a reference document or the like, information such as an author, a title, a publisher name, and a publication year is written. In other words, information relating to a literary work is written. As will be described later, in this embodiment, such information relating to a literary work is detected, and a link is established.

Referring to B of Fig. 2, for example, in liner notes, information relating to recorded music that is recorded in music CD in which the liner notes are added is written. The document illustrated in B of Fig. 2 is an example of the page on which information relating to recorded music is written, and a description of "recorded music" is written in an upper part of the page. Below the description, there are descriptions of "Track 1 "Piano Concerto No. 24 C minor" Mozart"", "Track 2 "Violin Concertos «The Four Seasons»" Vivaldi", and "Track 3 "Violin Concerto D Major" Tchaikovsky".

As above, in a document written in liner notes or the like, information such as the title of a music piece, an artist name, a conductor name, and an orchestra name is written. In other words, information relating to literary works is written. As will be described later, in this embodiment, such information relating to literary works is detected, and a link is established.

### [Configuration of Database]

Next, the literary work database will be described. For example, the server 21 is a site that sells literary works such as electronic books by allowing them to be downloaded. In such a case, in the literary work database 22 of the server 21, information of literary works such as electronic books (electronic documents) that are targets to be sold is written. In other words, in the literary work database 22 of the server 21, information relating to literary works that are managed by the server 21 is written and managed.

Similarly, the literary work database 32 of the electronic document reading device 31 manages the information of electronic documents (literary works) stored in the electronic document storing unit 33 inside the electronic document reading device 31. In addition, similarly, the literary work database 42 of the information terminal 41 manages the information of electronic documents (literary works) stored in the electronic document storing unit 43 inside the information terminal 41.

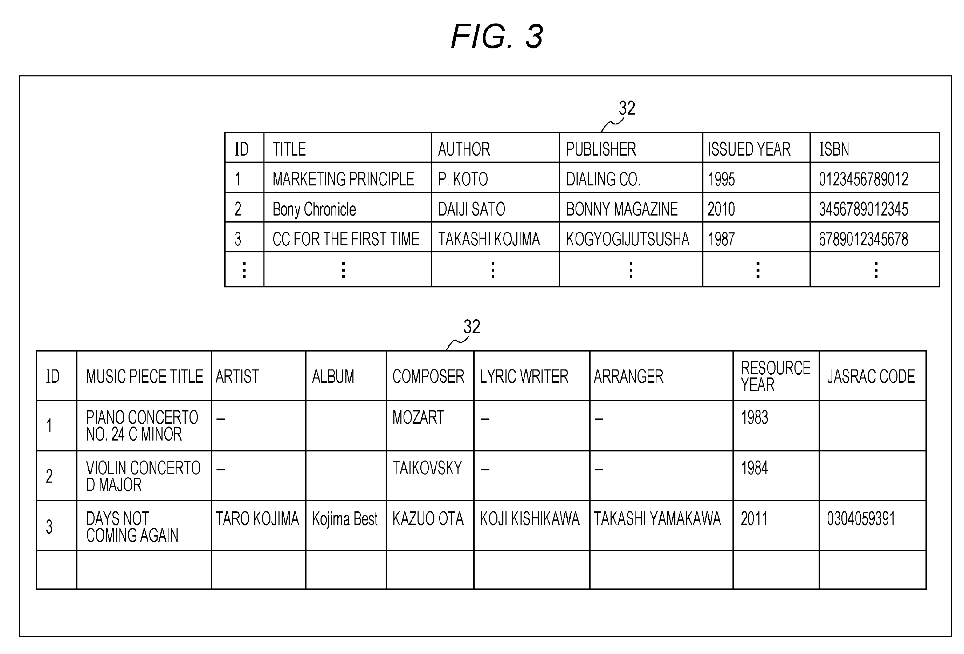

As above, while the information managed by the literary work database 22, the information managed by the literary work database 32, and the information managed by the literary work database 42 are different from one another, the structures thereof are the same. Thus, here, the literary work database 32 will be described as an example. Fig. 3 is a diagram that illustrates an example of the structure of the literary work database 32. The structure of the literary work database 32 illustrated in A of Fig. 3 illustrates a case where the literary works are books. In addition, the structure of the literary work database 32 illustrated in B of Fig. 3 illustrates a case where the literary works are music pieces.

In the literary work database 32 illustrated in A of Fig. 3, items of an ID uniquely representing a literary work, a title, an author, a publisher, an issued year, and an ISBN are arranged, and information corresponding to each item is written. For example, with the ID of "1", "Market Principle" is associated as the title, "P. Koto" is associated as the author, "Dialing Co." is associated as the publisher, "1995" is associated as the issued year, and "0123456789012" is associated as the IDBN.

Similarly, in the literary work database 32 illustrated in B of Fig. 3, which is a database relating to music, items of an ID uniquely represents a literary work, the title of a music piece, an artist, an album title, a composer, a lyric writer, an arranger, and a released year, and a JASRAC code are arranged, and information corresponding to each item is written. For example, with the ID of "3", "Days Not Coming Again" is associated as the title of a music piece, "Taro Kojima" is associated as an artist, "Kojima Best" is associated as the album title, "Kazuo Ota" is associated as a composer, "Koji Kishikawa" is associated as a lyric writer, "Takashi Yamakawa" is associated as an arranger, "2011" is associated as a released year, and "0304059391" is associated as a JASRAC code.

As above, in the literary work database 32, items corresponding to a literary work to be managed such as a book or a music piece are arranged, information corresponding to each item is written, and the information is managed. Here, while a book and a music piece have been described as an example, also for information of the other literary works, for example, a movie, a play, and a painting, it is apparent that items corresponding to each literary work may be arranged and managed.

### [Schematic Process Using Literary Work Database]

The function of the electronic document reading terminal 31 at the time of managing the literary work database 32 as described above will be described. An example of the screen when the document 61 as illustrated in A of Fig. 2 is stored in the electronic document storing unit 33 and is displayed in the electronic document reading terminal 31 is illustrated in Fig. 4. In this case, a case will be assumed in which a database relating to the book illustrated in A of Fig. 3 is built as the literary work database 32.

Referring to the diagram illustrated on the left side in Fig. 4, in the electronic document reading terminal 31, a display unit 101 that displays an electronic document and an operation unit 102, which is operated when the operation of turning the pages of the electronic document displayed on the display unit 101 is performed, are arranged.

On the display unit 101 illustrated in the diagram represented on the left side in Fig. 4, one page of the book illustrated in A of Fig. 2 is displayed. In addition, on the display unit 101 illustrated in the diagram represented on the left side in Fig. 4, "[1] P.S. Drag "Manager" Dialing Co., 2001" (hereinafter, referred to as a book [1] as is appropriate) and "[2] P. Koto "Market Principle" Dialing Co., 1995" (hereinafter, referred to as a book [2] as is appropriate) are underlined. The underlines represents that a link is established. By drawing an underline, a user can recognize that there is a link. This link is generated as the information terminal 41 or the electronic document reading terminal 31 performs a process to be described later.

On the display unit 101 illustrated in a diagram represented on the left side in Fig. 4, a state is formed in which the cursor is positioned on "[2] P. Koto "Market Principle" Dialing Co., 1995", which is displayed to be discriminated from "[1] P.S. Drag "Manager" Dialing Co., 2001". In such a state, when an operation of selecting and determining "book [2]" is performed, the display of the display unit 101 is switched to the screen as illustrated in a diagram represented on the right side in Fig. 4.

In this case, since "book [2]" is stored in the electronic document storing unit 33, a state is formed in which the link destination is the stored electronic document. In a case where the selected literary work is stored, the display of the display unit 101 is switched to the stored literary work.

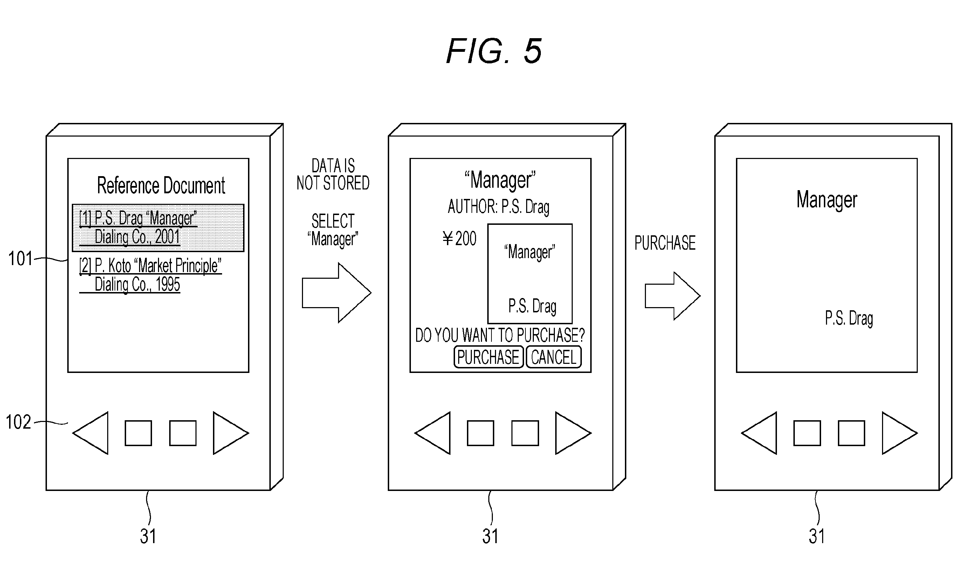

On the other hand, in a case where the selected literary work is not stored, the screen transits to a screen as illustrated in Fig. 5. First, a diagram represented on the left side in Fig. 5 will be referred to. The diagram represented on the left side in Fig. 5 is the same as the diagram represented on the left side in Fig. 4 except that the cursor is positioned on "[1] P.S. Drag "Manager" Dialing Co., 2001". In a case where this "book [1]" is not stored in the electronic document reading terminal 31, when the link of the "book [1]" is operated, the display of the display unit 101 is switched to a screen as illustrated on the center of Fig. 5.

In this case, since the "book [1]" is not stored in the electronic document storing unit 33, the link destination is set as a site for purchasing the book [1], and a state is formed in which the screen for the purchase is displayed on the display unit 101. As above, in a case where the selected literary work is not stored, an access to a destination for purchasing the literary work is made, and the display of the display unit 101 is switched to a screen for the purchase. In addition, a link used for the transition of the screen in this way is generated. In a case where such a screen is displayed, and a button for the purchase is operated, the screen of the display unit 101 is switched to a screen as illustrated in the diagram represented on the right side in Fig. 5.

The screen as illustrated in the diagram represented on the right side in Fig. 5 is a screen of the cover of the book [1] that has been purchased. In this way, when the purchase is made, data of the literary work is downloaded and is stored in the electronic document storing unit 33, and one page of the literary work is displayed on the display unit 101.

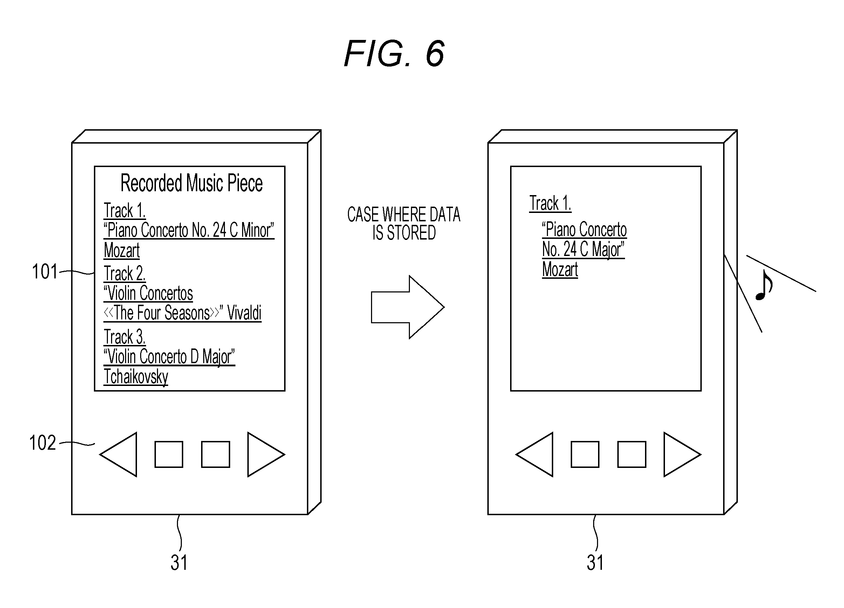

Also in the case of music, such a process may be similarly performed. An example of the screen when the document 61 as illustrated in B of Fig. 2 is stored in the electronic document storing unit 33 and is displayed in the electronic document reading terminal 31 is illustrated in Fig. 6. In this case, the database relating to music illustrated in Fig. 3B is assumed to be built as the literary work database 22.

On the display unit 101 illustrated in the diagram represented on the left side in Fig. 6, one page of the liner notes illustrated in B of Fig. 2 is displayed. On the display unit 101 illustrated in the diagram represented on the left side in Fig. 6, "Track 1 "Piano Concerto No. 24 C minor" Mozart"" (hereinafter, referred to as a "music piece [1]" as is appropriate), "Track 2 "Violin Concertos «The Four Seasons»" Vivaldi" (hereinafter, referred to as a "music piece [2]" as is appropriate), and "Track 3 "Violin Concerto D Major" Tchaikovsky" (hereinafter, referred to as a "music piece [3]" as is appropriate) are underlined. The underlines represent that links are established. A user can recognize that there is a link by seeing the underline.

On the display unit 101 illustrated in a diagram represented on the left side in Fig. 6, a state is formed in which the cursor is positioned on "Track 1 "Piano Concerto No. 24 C minor" Mozart"", which is displayed to be discriminated from the "music piece [2]" and the "music piece [3]". In such a state, when an operation of selecting and determining the "music piece [1]" is performed, the display of the display unit 101 is switched to the screen as illustrated in a diagram represented on the right side in Fig. 6.

In this case, since information of the "music piece [1]" is stored in the electronic document storing unit 33, a state is formed in which the link destination is the electronic document of the stored information of the music piece [1]. In addition, in a case where the electronic document reading terminal 31 has a function of outputting a sound by including a speaker or the like or any other function, it may be configured such that music data is stored, and a link is established.

In a case where information relating to the selected literary work is stored, the display of the display unit 101 is switched to the stored information of the music piece. In addition, in a case where a link is established in music data, the music data is reproduced and is provided for a user.

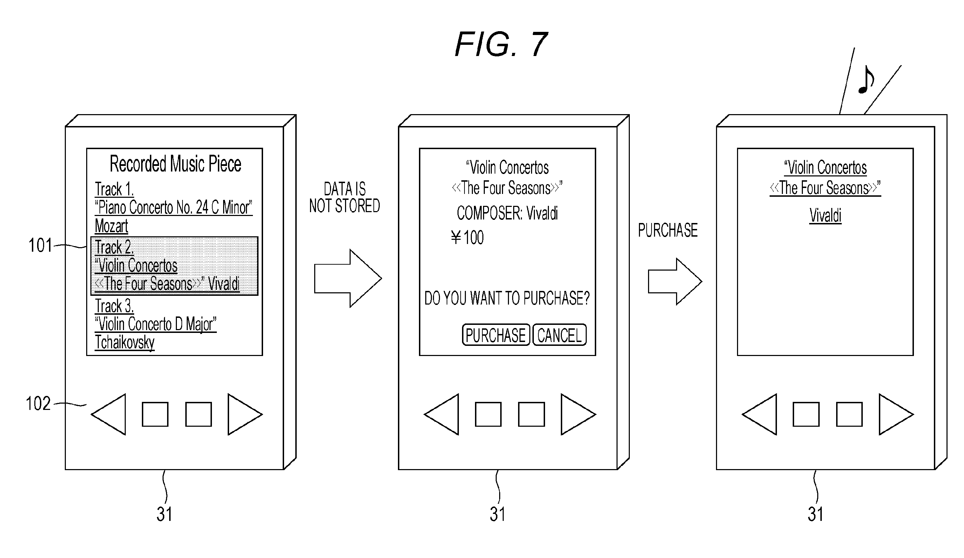

On the other hand, in a case where the information of the selected music piece is not stored, the screen transits to a screen as illustrated in a diagram represented in Fig. 7. First, a diagram illustrated on the left side in Fig. 7 will be referred to. The diagram represented on the left side in Fig. 7 is the same as the diagram represented on the left side in Fig. 6 except that the cursor is positioned on "Track 2 "Violin Concertos «The Four Seasons»" Vivaldi". In a case where this "book [2]" is not stored in the electronic document reading terminal 31, the display of the display unit 101 is switched to a screen as illustrated on the center of Fig. 7.

In this case, since the information (music data) relating to the music piece [2] is not stored in the electronic document storing unit 33, the link destination is set as a site for purchasing the music piece [2], and a state is formed in which the screen for the purchase is displayed on the display unit 101. As above, in a case where the selected music piece is not stored, an access to a destination for purchasing the music piece is made, and the display of the display unit 101 is switched to a screen for the purchase. In a case where such a screen is displayed, and a button for the purchase is operated, the screen of the display unit 101 is switched to a screen illustrated in a diagram represented on the right side in Fig. 7.

The screen as illustrated in the diagram represented on the right side in Fig. 7 is a screen on which the information relating to the purchased music piece [2] is displayed. In this way, when the purchase is made, the information of the music piece, the music data, and the like are downloaded and are stored in the electronic document storing unit 33, and the information (a text, an image of the jacket, or the like) relating to the music piece is displayed on the display unit 101.

### [Process of Generating Link]

Next, the process for generating a link in the information of a literary work written inside the electronic document will be described. A case will be described as an example in which the electronic document reading terminal 31 performs the process for the electronic document stored in the electronic document storing unit 33 as a target. In addition, also in a case where the information terminal 41 performs the process for an electronic document stored in the electronic document storing unit 43 as a target, basically, the process may be similarly performed.

In addition, when the processing capability of the electronic document reading terminal 31 and the processing capability of the information terminal 41 are compared with each other, in a case where the processing capability of the information terminal 41 is higher than that of the electronic document reading terminal 31, the information terminal 41 may be configured to perform the process instead of the electronic document reading terminal 31. For example, it may be configured such that an electronic document stored in the electronic document storing unit 33 of the electronic document reading terminal 31 is acquired by the information terminal 41, and the information terminal 41 performs the process for the acquired electronic document.

Furthermore, it may be configured such that the process for generating a link to be described later is performed by the information terminal 41, an electronic document in which a link is embedded is generated, and the electronic document in which the link is embedded is supplied to the electronic document reading terminal 31 and is stored.

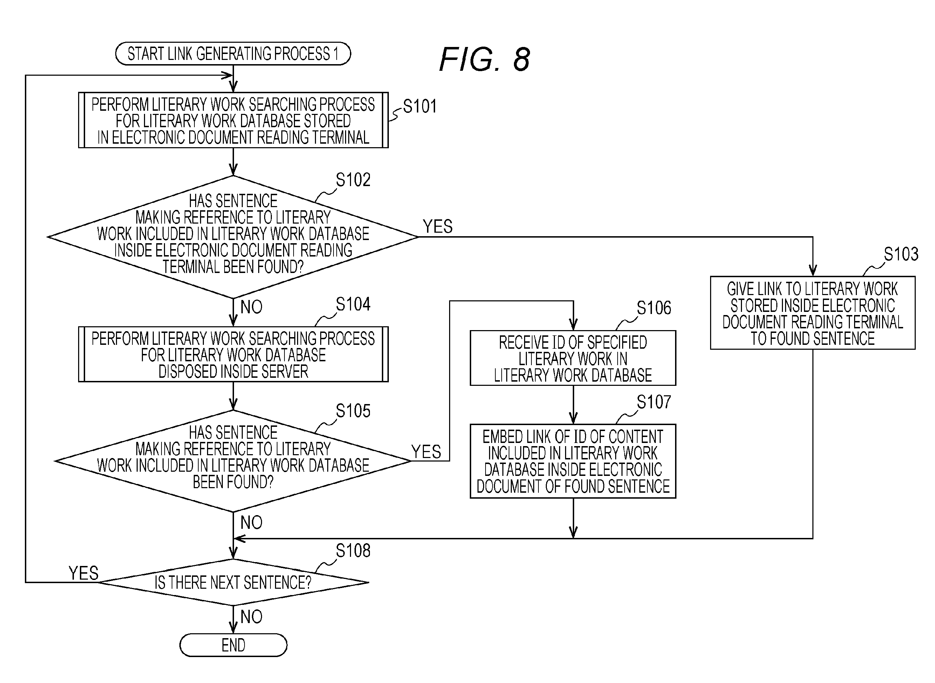

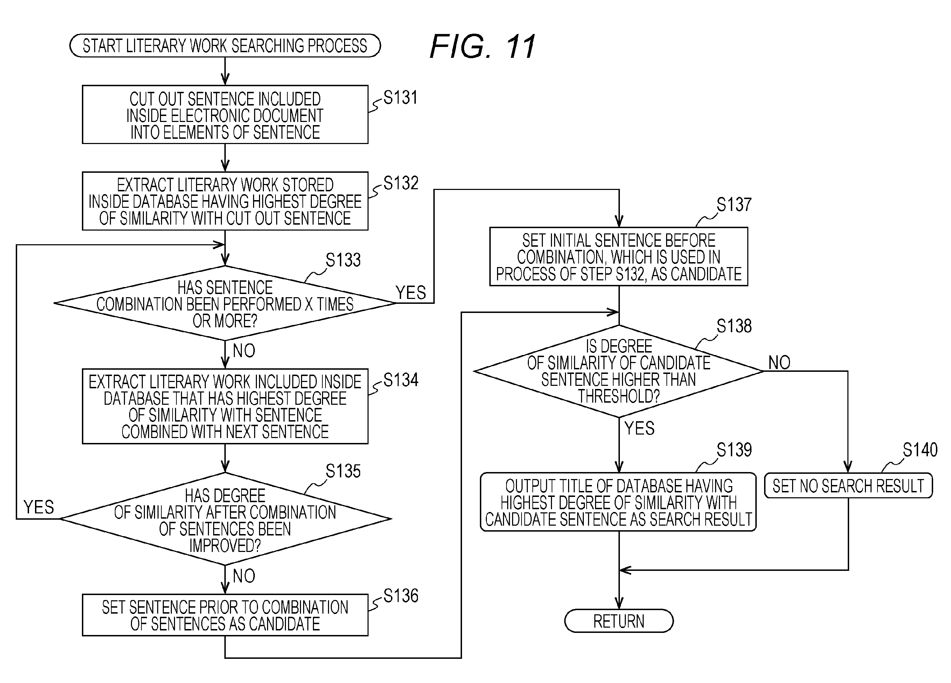

By referring to a flowchart represented in Fig. 8, the process of generating a link for an electronic document stored in the electronic document storing unit 33 as a target using the electronic document reading terminal 31 will be described. In Step S101, a literary work searching process for the literary work database 32 disposed inside the electronic document reading terminal 31 is performed. By performing the process of this Step S101, a sentence making reference to a literary work and a literary work that is referred to from the sentence are detected from the sentence of an electronic document that is set as the processing target. The literary work searching process of this Step S101 will be described later with reference to a flowchart represented in Fig. 11, and, first, the description of the process of Step S102 and subsequent steps will be continued.

The process of Step S102 is performed by using a result of the process of Step S101. In other words, in Step S102, it is determined whether a sentence making reference to a literary work included in the literary work database 32 inside the electronic document reading terminal 31 is found. Inside the literary work database 32, information of electronic documents stored in the electronic document reading terminal 31 is written, and it is determined whether or not a sentence matching the information is detected from the inside of the electronic document set as a processing target. In a case where the sentence included in the electronic document set as the processing target matches the information that is managed by the literary work database 32, the sentence is managed as matching information and represents to make reference to a literary work stored in the electronic document storing unit 33.

In Step S102, in a case where it is determined that a sentence making reference to a literary work included in the literary work database 32 disposed inside the electronic document reading terminal 31 has been found, the process proceeds to Step S103.

In Step S103, a link to the literary work stored inside the electronic document reading terminal 31 is given to the sentence detected in the process of Step S101. The link of this case, for example, is the link that has been described with reference to Fig. 4. Here, Fig. 4 will be referred to again. As illustrated in the diagram represented on the left side in Fig. 4, "[1] P.S. Drag "Manager" Dialing Co., 2001" and "[2] P. Koto "Market Principle" Dialing Co., 1995" are underlined, and these underlines represent that links are established.

These "[1] P.S. Drag "Manager" Dialing Co., 2001" and "[2] P. Koto "Market Principle" Dialing Co., 1995" are sentences that are detected as "sentences making reference to literary works" in Step S101 or Step S104

(to be described later). As described with reference to Fig. 4, since the literary work "[2] P. Koto "Market Principle" Dialing Co., 1995" is stored in the electronic document reading terminal 31, "Yes" is determined in Step S102, and the process proceeds to Step S103.

In other words, the information "[2] P. Koto "Market Principle" Dialing Co., 1995", as described with reference to Fig. 3, is managed by the literary work database 32, the sentence of "[2] P. Koto "Market Principle" Dialing Co., 1995" included in the electronic document and the information managed by the literary work database 32 match each other. Accordingly, it is determined that a sentence making reference to the literary work included in the literary work database 32 stored in the electronic document reading terminal 31 has been found.

Accordingly, in this case, a link is generated for the electronic document "[2] P. Koto "Market Principle" Dialing Co., 1995" that is stored in the electronic document storing unit 33 of the electronic document reading terminal 31. In this way, in a case where a sentence making reference to a literary work is detected from the electronic document, and a literary work represented by the detected sentence is stored, a link that is accessible to the stored literary work is generated. In this way, when the link is generated, the process proceeds to Step S108.

In Step S108, it is determined whether there is a next sentence. In a case where it is determined that there is the next sentence in Step S108, the process of Step S101 and subsequent steps is repeated for the sentence determined to be present. On the other hand, in a case where it is determined that there is no next sentence in Step S108, the process of the flowchart for generating a link ends.

In Step S102, in a case where it is determined that a sentence making reference to a literary work included in the literary work database 32 disposed inside the electronic document reading terminal 31 has not been found, the process proceeds to Step S104. In Step S104, a literary work searching process is performed for the literary work database 22 included in the server 21. By performing the process of this Step S104, a sentence making reference to a literary work and the literary work are detected.

The literary work searching process performed in this Step S104 is the same as the literary work searching process performed in Step S101 except that the database that is a search destination is the literary work database 22 of the server 21. Thus, the literary work searching process performed in this step S104 will be described later with reference to a flowchart represented in Fig. 11, and, first, the description of the process of Step S105 and subsequent steps will be continued.

In Step S105, it is determined whether a sentence making reference to a literary work included in the literary work database 22 disposed inside the server 21 has been found. In Step S105, in a case where it is determined that a sentence making reference to a literary work included in the literary work database 22 disposed inside the server 21 has been found, the process proceeds to Step S106.

In Step S106, the ID of the literary work is acquired from the literary work database 22. Then, in Step S107, a link making reference to the literary work represented by the ID is given to the sentence that has been detected in the process of Step S104. The link of this case, for example, is a link described with reference to Fig. 5. Here, Fig. 5 will be referred to again. As illustrated in the diagram represented on the left side in Fig. 5, "[1] P.S. Drag "Manager" Dialing Co., 2001" and "[2] P. Koto "Market Principle" Dialing Co., 1995" are underlined, and these underlines represent that links are established.

These "[1] P.S. Drag "Manager" Dialing Co., 2001" and "[2] P. Koto "Market Principle" Dialing Co., 1995" are sentences that are detected as "sentences making reference to literary works" in Step S101 or Step S104. As described with reference to Fig. 5, since the literary work "[1] P.S. Drag "Manager" Dialing Co., 2001" is not stored in the electronic document reading terminal 31, "No" is determined in Step S102. Then, the process proceeds to Step S105 through Step S104, and, in Step S105, the literary work is determined to be managed by the server 21, and the process proceeds to Steps S106 and S107.

Accordingly, in this case, since "[1] P.S. Drag "Manager" Dialing Co., 2001" is managed by the server 21, an ID assigned for the management thereof is acquired. By using this ID, "[1] P.S. Drag "Manager" Dialing Co., 2001" that is managed by the server 21 can be accessed. Here, the access, for example, represents an access to a site providing a purchase screen as illustrated in the diagram represented on the center in Fig. 5 or the like. Then, a link for enabling such an access is generated and is given to the detected sentence. In this manner, when the link is generated, the process proceeds to Step S108.

In Step S108, it is determined whether there is a next sentence, and in a case where it is determined that there is the next sentence, the process of Step S101 and subsequent steps is repeated for the sentence determined to be present. On the other hand, in a case where it is determined that there is no next sentence in Step S108, the process of the flowchart for generating a link ends.

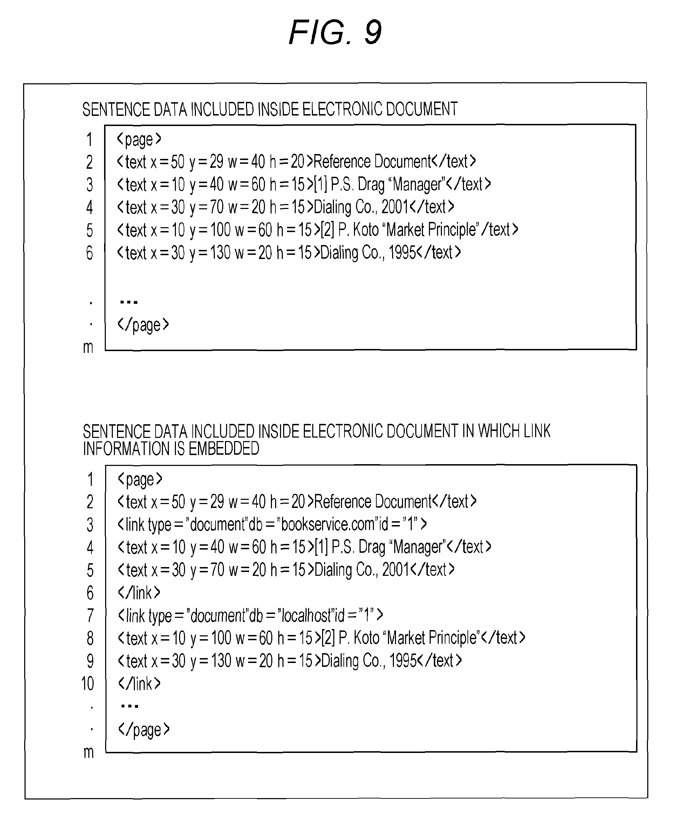

Here, an electronic document to which a link is given by performing such a process will be further described. Fig. 9 is a diagram that illustrates an example of sentence data of an electronic document before embedding a link therein and sentence data of the electronic document after embedding the link therein. The example illustrated in Fig. 9 is an example in which the book illustrated in A of Fig. 2 is formed as an electronic document and is set as the processing target described above.

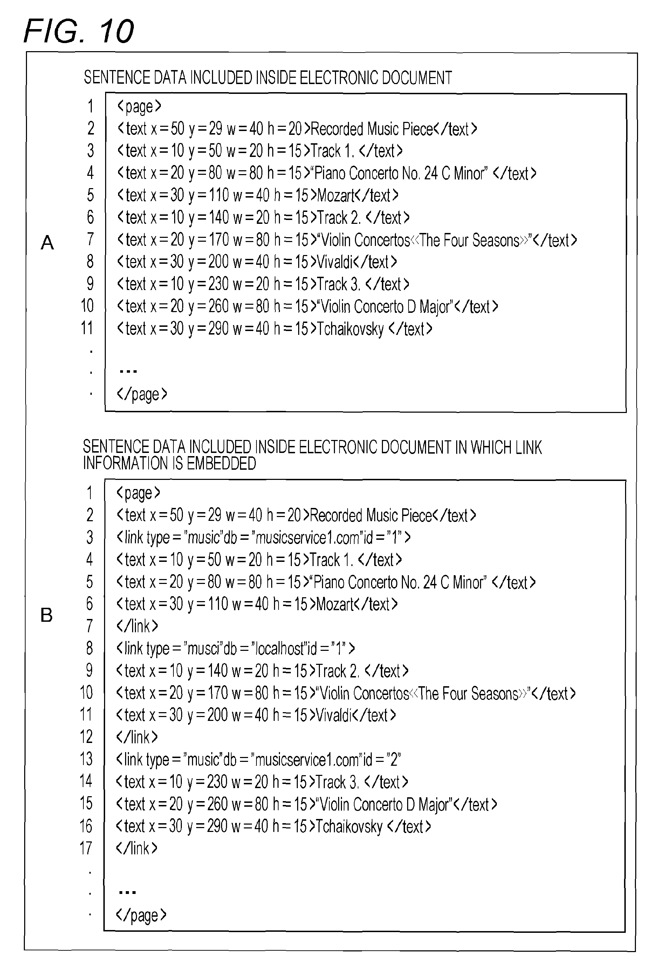

Fig. 10 is a diagram that illustrates an example of sentence data of an electronic document before a link is embedded therein and sentence data of the electronic document after the link is embedded therein. The example illustrated in Fig. 10 is an example in which the liner notes illustrated in B of Fig. 2 are formed as an electronic document and is set as the processing target described above.

As illustrated in Figs. 9 and 10, sentence data included in the electronic document, for example, is described in the extensible markup language (XML) format. Each one of A of Fig. 9 and A of Fig. 10 is sentence data before embedding a link therein. Each one of B of Fig. 9 and B of Fig. 10 is sentence data after embedding a link therein. In the figure, row numbers attached to the left side are attached for the description.

Referring to A of Fig. 9, the sentence data before embedding a link therein is configured by data of a text that is displayed on the display unit 101. Data written between the first row "<page>" and the m-th row "</page>" is handled as one page of the electronic document. Data of the second row "<text x=50 y=29 w=40 h=20>reference document</text>" represents that a character string of "reference document" starts to be displayed from the position having an x coordinate of "50" and a y coordinate of "29" and the size of the display has a width (w) of "40" and a height (h) of "20".

In this way, the display start position and the size are defined, and the character string to be displayed is described as sentence data. The data relating to a music piece illustrated in A of Fig. 10 has a configuration similar thereto. When a link is embedded in such sentence data, sentence data as illustrated in B of Fig. 9 is formed. Referring to B of Fig. 9, by embedding a link, data is formed which is acquired by adding <link type="document" db="bookservice.com" id="1"> of the third row, </link> of the sixth row, <link type="document" db="localhost" id="1"> of the seventh row, and </link> of the tenth row to the sentence data illustrated in A of Fig. 9 before the embedding of the link.

A portion that is surrounded by a link element from <link type="document" db="bookservice.com" id="1"> of the third row to </link> of the sixth row is the range of a sentence represented by an underline representing the establishment of a link when being displayed by the electronic document reading terminal 31. As examples of the attribute of this link, there are type, db, and id. The type represents the type of literary work of the link destination, and, for example, document represents a document, and music represents music. In addition, db represents the URL of a database to be connected.

For example, localhost represents the electronic document reading terminal 31, in other words, the literary work database 32 arranged inside the electronic document reading terminal 31. In addition, id is a number that uniquely represents a literary work included in the database represented by db.

For example, <link type="document" db="bookservice.com" id="1"> of the third row represents making reference to data having an ID of "1" by accessing a database (site) called "bookservice.com". In addition, <link type="document" db="localhost" id="1"> of the seventh row represents making reference to data having an ID of "1" by accessing a database called "localhost", in other words, the literary work database 32 arranged inside the electronic document reading terminal 31.

In this way, the range in which the underline used for representing the establishment of a link is established, a database of a link destination, the ID of data to be referred to, and the like are additionally written inside the sentence data. The sentence data relating to the music piece illustrated in B of Fig. 10 has a configuration similar thereto.

### [Literary Work Searching Process]

The literary work searching process that is performed in Steps S101 and S104 of the flowchart represented in Fig. 8 will be described with reference to the flowchart represented in Fig. 11. As described above, Steps S101 and S104 are basically the same process except that the databases to be referred to are different from each other. Thus, here, the process performed in Step S101 will be described as an example.

In Step S131, a document included in the electronic document that is set as the processing target is cut out into element units of the sentence. The element unit at this time, for example, may be units of newlines. Alternatively, the document may be cut out into parts having a predetermined number of characters. In Step S132, the degree of similarity between the cut sentence and the information of a literary work included in the literary work database 32 is calculated for the information of all the literary works stored in the literary work database 32. Then, a literary work having a highest degree of similarity is detected.

For example, words included in a sentence that is set as the processing target and the information such as the title, the title of the music piece, and a publisher described with reference to Fig. 3, which is included in the literary work database 32, are compared with each other, and the degree of similarity is calculated based on the degree of matching the words included in the literary work database 32 or the degree of presence of words not matching the words included in the literary work database 32.

In Step S133, it is determined whether a sentence combination is repeated for X times or more. Here, since the sentence combination is performed in the process of Step S134 on the later stage, first, the process of Step S134 will be described. In Step S134, a sentence acquired by combining the sentence that is set as the processing target at that time point with the previous sentence is generated, and the degree of similarity is calculated again for the combined sentence. Then, a literary work having a highest degree of similarity is detected.

Such combining the sentence set as the processing target with the next sentence is called as a sentence combination. It is determined whether this sentence combination is repeated for X times, which is set in advance, or more in Step S133. In Step S133, in a case where it is determined that the sentence combination has not been repeated X or more times, the process proceeds to Step S134, and, as described above, the sentence combination is performed, and the degree of similarity is calculated.

Then, in Step S135, a highest degree of similarity before the combination and a highest degree of similarity after the combination are compared with each other, and it is determined whether the degree of similarity after the combination is higher than that before the combination. In Step S135, in a case where the degree of similarity after the combination is determined to be higher than the degree of similarity before the combination, the process is returned to Step S133, and the process of subsequent steps are repeated. In other words, the process of further combining sentences, and calculating the degree of similarity, and comparing the degrees of similarity with each other is repeated.

For example, in a case where an author name is included in the sentence before the sentence combination, and a work name is additionally included in the sentence after the sentence combination, it is determined that the degree of similarity after the combination is higher than the degree of similarity before the combination. In this way, as new information is included by combining sentences together, the degree of similarity may be considered to become higher. However, even when a new sentence is combined, in a case where new information is not included in the combined sentence, the similarity after the combination is not higher than the degree of similarity before the combination.

Accordingly, while the degree of similarity after the combination is determined to be higher than the degree of similarity before the combination, a next sentence that may include new information is combined, and the combining of sentences is stopped at a time point when the degree of similarity after the combination is not determined to be higher than the degree of similarity before the combination.

In Step S135, in a case where the degree of similarity after the combination is not determined to be higher than the degree of similarity before the combination, the process proceeds to Step S136, and the sentence prior to the sentence combination is regarded as a candidate.

In this way, when the sentence that becomes the candidate is determined, the process proceeds to Step S138. In the process of Step S138, it is determined that the sentence combination has been repeated X times or more in Step S133, and the process of Step S137 may go through. In Step S137, the first sentence before the combination, which has been used in the process of Step S132, is regarded as a candidate.

In this way, when the candidate is determined, the process of Step S138 is performed for the sentence set as the candidate. In Step S138, it is determined whether a highest degree of similarity calculated using the sentence set as the candidate exceeds a predetermined threshold. In Step S138, in a case where the highest degree of similarity calculated by using the sentence set as the candidate is determined to exceed the predetermined threshold, the process proceeds to Step S139.

In Step S139, the title of the literary work database 22 having the highest similarity with the sentence set as the candidate is output to the process of the later stage as a search result. In other words, a sentence that is set as the candidate is regarded as a "sentence making reference to the literary work", and the title included in the literary work database 22 is treated as a detected literary work.

On the other hand, in Step S138, in a case where the highest degree of similarity calculated by using the sentence set as the candidate is determined not to exceed the predetermined threshold, the process proceeds to Step S140. In other words, there is a high possibility that the sentence set as the candidate is not a "sentence making reference to the literary work", and it is determined that there is no search result, and the process of the later stage is performed.

In this way, a sentence making reference to the literary work and a literary work to which the sentence makes reference are detected from the electronic document. In a case where such a process is performed in Step S101, the process is performed with the literary work database 32 of the electronic document reading terminal 31 being regarded as the database of the search destination. Accordingly, the process performed in Step S101 is a process that is used for determining whether the literary work is a literary work stored in the terminal.

On the other hand, in Step S104, in a case where such a process is performed, the process is performed with the literary work database 21 of the server 21 being regarded as the database of the search destination. Accordingly, the process performed in Step S104 is a process used for determining whether the literary work is a literary work managed by the other device. In this way, in this embodiment, whether the literary work is a literary work managed by the terminal or a literary work managed by the other device is determined by referring to the other database.

### [Process of Display of Electronic Document]

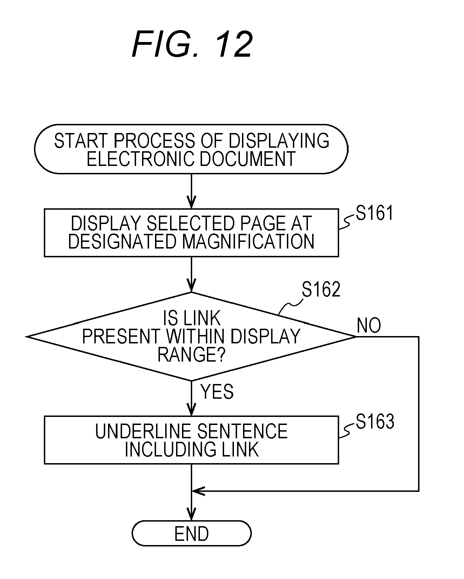

Next, the process performed when the electronic document is displayed on the display unit 101 of the electronic document reading terminal 31 will be described with reference to a flowchart represented in Fig. 12. In Step S161, the selected page is display at a magnification designated by the user. Then, in Step S162, it is determined whether or not a link is present within the display range. For example, in a case where a sentence of sentence data in which a link is not embedded, as illustrated in A of Fig. 9, is set as the target for the display, in Step S162, it is determined that any link is not present within the display range, and the process of the flowchart represented in Fig. 12 ends.

On the other hand, in a case where a sentence of sentence data in which a link is embedded as illustrated in B of Fig. 9 is set as the target for the display, in Step S162, it is determined that a link is present within the display range, and the process proceeds to Step S163. In Step S163, the display is performed with the sentence included in the link being underlined. The range in which the underline is drawn and the like, as described with reference to B of Fig. 9, corresponds to data interposed between link elements.

In this way, for example, the screen as illustrated in the diagram represented on the left side in Fig. 4 is displayed on the display unit 101. In the sentence inside the screen displayed on the display unit 101 illustrated in the diagram represented on the left side in Fig. 4, a link is established. Next, the process performed when a sentence in which such a link is established is selected by a user will be described.

### [Process Performed When Link Is Selected]

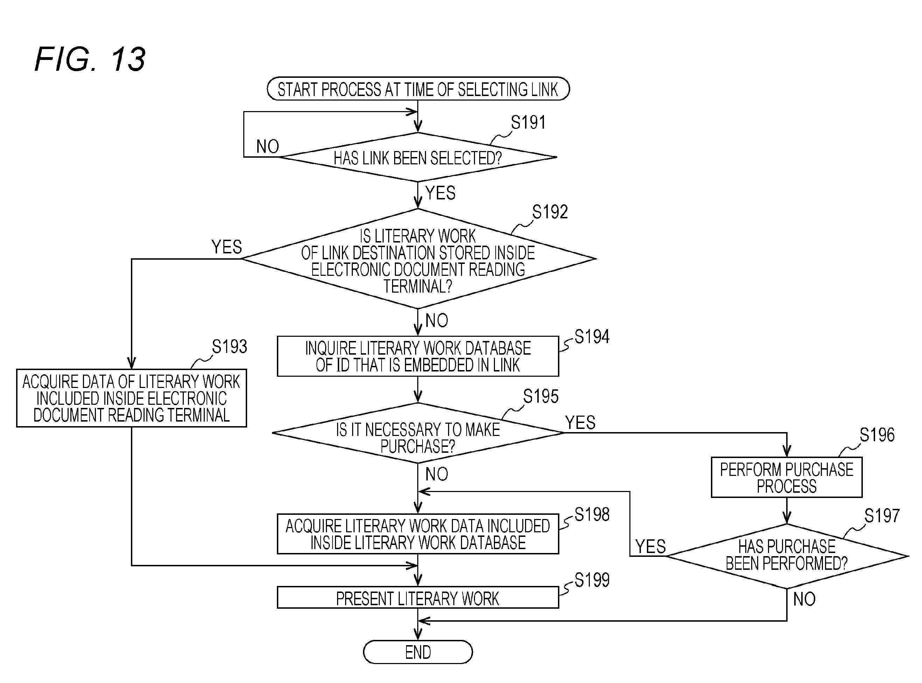

Fig. 13 is a flowchart that illustrates a process performed when a link is established in a displayed sentence, and the link is selected. In Step S191, it is determined whether or not the link is selected by the user. In Step S191, until it is determined that the link is selected, the process performed when the link is selected is in a waiting state. In a case where it is determined that the link has been selected, the process performed when the link is selected starts.

In Step S192, it is determined whether or not the link destination of the selected link is inside the electronic document reading terminal 31. The determination whether the link destination of the selected link is inside the electronic document reading terminal 31 is performed by referring to the sentence data to be processed. For example, in a case where sentence data as illustrated in B of Fig. 9 is processed, when the link is selected, in a case where the link information is <link type="document" db="bookservice.com" id="1"> written in the third row, it can be known that the link destination is a database of the other device connected to the network 11 based on the information of db="bookservice.com".

Similarly, in a case where the link information is <link type="document" db="localhost" id="1"> of the seventh row, it can be known that that the link destination is a database disposed inside the electronic document reading terminal 31 based on the information of db="localhost".

In this way, by referring to the information of the link destination included in the sentence data, in Step S192, in a case where the link destination of the selected link is disposed inside the electronic document reading terminal 31, the process proceeds to Step S193. In Step S193, data of the literary work is read from the electronic document storing unit 33 by referring to corresponding data included in the literary work database 32 disposed inside the electronic document reading terminal 31 that is set as the link destination. Then, the screen that is based on the data of the literary work that has been read is displayed on the display unit 101 (Step S199).

Such a flow is a case as described with reference to Fig. 4. Referring to Fig. 4 again, when the screen illustrated on the diagram represented on the right side in Fig. 4 is displayed on the display unit 101, in a case where "[2] P. Koto "Market Principle" Dialing Co., 1995" is selected, the link destination of this literary work is the literary work database 32 included in the electronic document reading terminal 31, the process proceeds to Step S193. Then, by performing the process of Steps S193 and S199, the display of the display unit 101 is switched to the screen like the figure represented on the right side in Fig. 4, and the literary work selected by the user is provided for the user.

On the other hand, in Step S192, in a case where the link destination of the selected link is determined not to be disposed inside the electronic document reading terminal 31, the process proceeds to Step S194. In Step S194, for the literary work database on the URL included in the information of the link that is included in the sentence data, an inquiry is made using an ID included in the same information of the link.

For example, when sentence data as illustrated in B of Fig. 9 is processed, in a case where the information of the selected link is <link type="document" db="bookservice.com" id="1"> written in the third row, an inquiry for data of id="1" is made for the literary work database of the server that is db="bookservice.com".

As a result of this inquiry, it is determined whether the literary work is a literary work required to be purchased in Step S195. In Step S195, in a case where a literary work required to be purchased is determined, the process proceeds to the process of Step S196. In Step S196, the purchase process is performed. As this purchase process, although the flow of the process up to the purchase may differ depending on the site of the connection destination, the basic process is the same. For example, a purchase screen that includes a purchase amount, the image of the cover, and the like, as illustrated in the figure represented on the center in Fig. 5, and includes buttons used for determining whether to make a purchase is displayed on the display unit 101.

Then, a button "purchase" or a button "cancel" is operated. In Step S197, it is determined whether or not the literary work has been purchased. In a case where the button "purchase" is operated, in Step S197, it is determined that the purchase has been made, and the process proceeds to Step S198. On the other hand, in a case where the button "cancel" is operated, in Step S197, it is determined that the purchase has not been made, and the process proceeds to Step S198.

In a case where the button "purchase" is operated, the server (here, the server 21) of the connection destination performs an accounting process and the like by using customer data managed by the customer database 23 and the like and supplies data of the purchased literary work to the electronic document reading terminal 31. The electronic document reading terminal 31 stores the supplied data of the literary work in the electronic document storing unit 33 and adds information of the purchased literary work to the literary work database 22.

In this way, in a case where the data of the purchased literary work is stored in the electronic document storing unit 33, in Step S198, the data of the literary work that is stored in the electronic document storing unit 33 is acquired, and a screen that is based on the acquired data of the literary work is displayed on the display unit 101 (Step S199). For example, as illustrated in the diagram represented on the right side in Fig. 5, the cover of the purchased literary work is displayed on the display unit 101.

On the other hand, in Step S195, in a case where a literary work not required to be purchased is determined, while the purchase is not required, the literary work is stored in the other device (server 21). Accordingly, in Step S198, an access to the server 21 is made, and data of the corresponding literary work is downloaded and is stored in the electronic document storing unit 33. In the subsequent process, as described above, in Step S199, a screen that is based on the downloaded data of the literary work is displayed on the display unit 101.

On the other hand, in Step S197, in a case where it is determined that the literary work has not been purchased, the process performed when the link is selected, which is illustrated in Fig. 13, ends. In this case, for example, when the screen as illustrated in the diagram represented on the center in Fig. 5 is displayed on the display unit 101, the button "cancel" is operated, and accordingly, for example, the display of the display unit 101 is switched to the screen illustrated in the diagram represented on the left side in Fig. 5, in other words, the screen before the switching to the purchase screen.

In this way, when the link is operated, an access to the link destination is made, and the literary work is displayed or, a purchase thereof is made.

In the document 61 captured by the scanner 51 or the like, generally, information of a link or the like is not present. However, as described above, by applying the present technology, a link can be generated for an electronic document that does not include a link. In addition, a link for accessing the data of a literary work stored in the terminal or a link for accessing the data of a literary work stored in the other device can be generated.

### [Generation of Other Link]

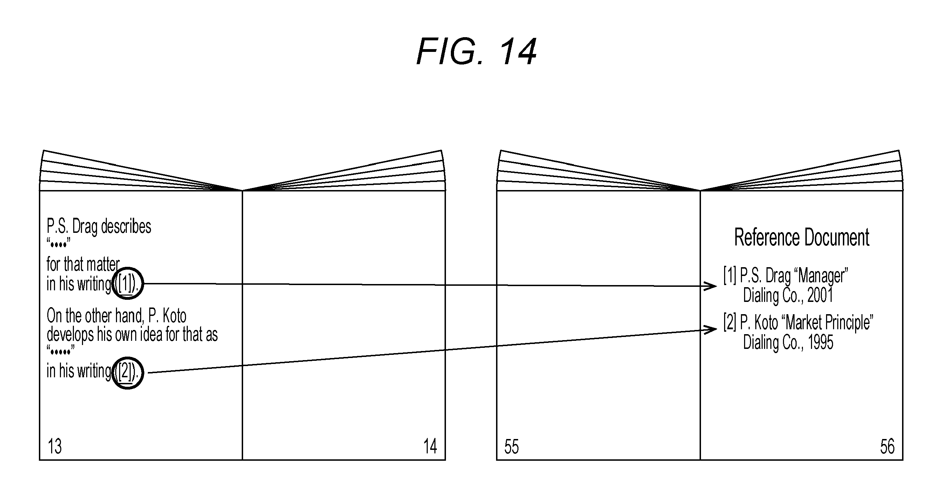

As illustrated in A of Fig. 2, as one page of a book, while there is a page on which reference documents are listed, other than such a page, there is a case where a number is attached to a reference document, and the number is written in the text. An example of such a page is illustrated in Fig. 14.

A predetermined page of a book that is illustrated in the diagram represented on the left side of Fig. 14 is a page of the text in the book, and a predetermined page of a book that is illustrated in the diagram represented on the right side of Fig. 14 is a page of reference documents that are referred to from the text. When reference documents are written in the text, there are difficulty in reading the text and the like. Accordingly, as illustrated in the diagram represented on the left side in Fig. 14, there is a case where only reference numbers are written. Referring to the diagram represented on the left side of Fig. 14, in the description of "is described ([1])" of the 13th page, "[1]" represents "[1] P.S. Drag "Manager" Dialing Co., 2001" that is cited using the same number in the reference document list of the 56th page illustrated in the diagram represented on the right side in Fig. 14.

Similarly, referring to the diagram represented on the left side of Fig. 14, in the description of "own idea is developed ([2])" of the 13th page, "[2]" represents "[2] P. Koto "Market Principle" Dialing Co., 1995" that is cited using the same number in the reference document list of the 56th page illustrated in the diagram represented on the right side in Fig. 14.

In the case of a paper-medium book, for example, when the text of the 13th page is read, in a case where a reference document that is cited by a number [1] is desired to be known, it is necessary to turn the page to the 56th page and to read the description of the reference document written on the 56th page. In addition, after the reference document is recognized, in a case where the reference document is desired to be read, it is necessary to find out the reference document, for example, from a bookshelf.

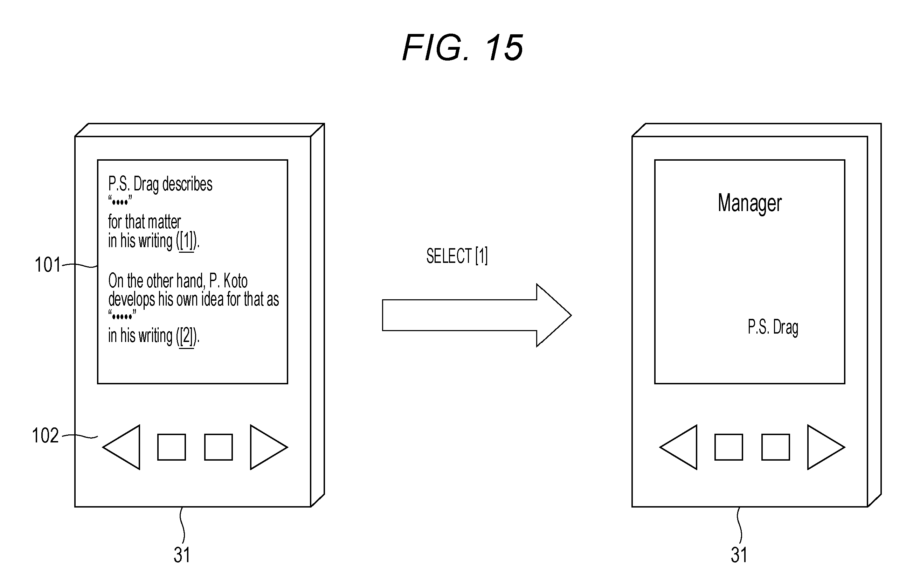

Such an operation is inconvenient for the user. Thus, an electronic document is configured such that a reference document can be read without performing such an inconvenient process. When described with reference to Fig. 15, a diagram represented on the left side in Fig. 15 illustrates an example in which a page of a book illustrated on the left side in Fig. 14 is displayed on the display unit 101 of the electronic document reading terminal 31 as an electronic document. In a sentence displayed on the display unit 101 that is illustrated in the diagram represented on the left side in Fig. 15, when "is described ([11])" is checked, [1] is underlined in the description. In other words, a link is established in [1].

Similarly, a number [2] is displayed to be underlined, and it is illustrated that a link is established. When the user selects [1], as illustrated in the diagram represented on the right side in Fig. 15, the display of the display unit 101 is switched to a display of a reference document (literary work) to which the number [1] is assigned. In this way, the user can read a reference document that is the literary work of the link destination by only selecting the number that is assigned to the reference document.

In this way, by assigning a unique number to a reference document inside the document, analyzing a connection inside the document in a case where the number is referred to from the inside of the document, and reflecting the result thereof on the electronic document, it is possible to present the document of the reference destination when a reference number inside the document is selected in the electronic document reading terminal 31 as illustrated in Fig. 15.

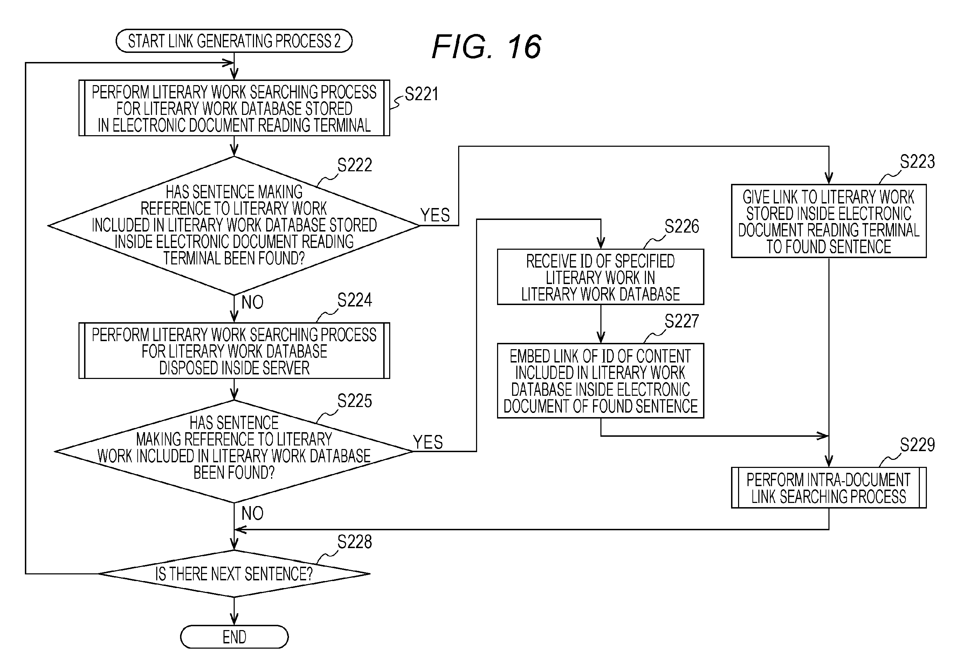

The process performed when a link is generated for such a reference number will be described with reference to a flowchart represented in Fig. 16. In order to generate a link for such a reference number, in addition to detecting the reference number, it is necessary to detect a literary work that is referred to by the reference number and detect whether the detected literary work is stored in the electronic document reading terminal 31 or the other device. The process of the latter half for detecting the literary work and detecting whether the detected literary work is stored in the electronic document reading terminal 31 or the other device is performed the same as in the above-described case.

In other words, referring to the flowchart represented in Fig. 16, the process of Steps S221 to S228 is performed the same as the process of Steps S101 to S108 of the flowchart represented in Fig. 8, a sentence making reference to the literary work is detected inside the electronic document, and a link for accessing the sentence is generated. Then, a link from the reference number is established for the link destination of the generated link or the sentence making reference thereto. In other words, a link is generated for the reference number and the "sentence making reference to the literary work" inside the electronic document that is referred to by the reference number, or a link for accessing the literary work is generated from the reference number.

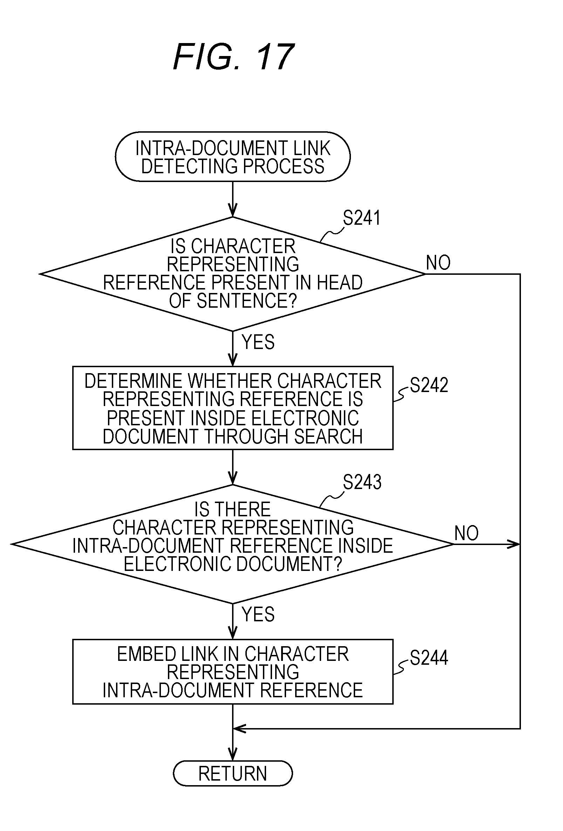

Such a process is performed as an intra-document link detecting process in Step S229. The intra-document link detecting process of Step S229 will be described with reference to a flowchart represented in Fig. 17.

In Step S241, for the "sentence making reference to the literary work" in which a link is established in the process of Step S223 or Step S227 as a target, it is determined whether a character representing an intra-document reference is present at the head of the sentence. Here, the character representing an intra-document reference, for example, is [1], *1, #1, or the like. For example, as illustrated in the diagram represented on the right side in Fig. 14, in a head portion of the sentence making reference to a literary work, a reference number such as [1], *1, or #1 is written. In Step S241, it is determined whether such a reference number is present in the head portion of the "sentence making reference to the literary work".

In Step S241, in a case where it is determined that the character representing the intra-document reference is not present in the head portion of the sentence making reference to the literary work, the sentence is a sentence other than the target of the intra-document link detecting process, and accordingly, the process of the flowchart represented in Fig. 17 ends. On the other hand, in Step S241, in a case where it is determined that the character representing the intra-document reference is present in the head portion of the sentence making reference to the literary work, the process proceeds to the process of Step S242.

In Step S242, it is determined whether the character representing the reference is present inside another sentence inside the electronic document through a search. For example, in a case where it is determined that the character representing a reference, which is "[1]", is present in Step S241, the character string "[1]" is detected from the electronic document. As a result of the search process performed in Step S242, it is determined whether the character representing the reference has been detected from the electronic document in Step S243.

In Step S243, in a case where it is determined that the character representing the intra-document reference is not present inside the electronic document, the process of the flowchart represented in Fig. 17 ends. On the other hand, in Step S243, in a case where it is determined that the character representing the intra-document reference is present inside the electronic document, the process proceeds to Step S244. In Step S244, a link is embedded in the character that represents the intra-document reference. In other words, for the sentence in which the character representing the intra-document reference is determined to be present, the link given in the process of Step S223 or Step S227 is given to the character representing the intra-document reference inside the sentence.

For example, referring to the diagram represented on the right side in Fig. 14, "[1]" is present as the character representing the intra-document reference on the 56th page. This "[1]" is detected in Step S241. Then, in the process of Steps S242 and 243, a sentence "is described in [1]" on the 13th page illustrated in the diagram represented on the left side in Fig. 14 is found, and the character representing the intra-document reference, which is "[1]", that is the processing target is detected from this sentence.

The link given to the "[1] P.S. Drag "Manager" Dialing Co., 2001" of the 56th page is given to "1" inside the sentence of "is described in [1]" detected in this way. By giving such a link, as described with reference to Fig. 15, a user can read a literary work that is referred to by the reference number "[1]" by only operating a predetermined operation such as clicking on the reference number "[1]".

In this way, a link can be generated for the inside of the document, and accordingly, the usability of the electronic document can be improved.

According to the present technology, when an electronic document acquired by being read by the scanner 51 or the like is read, a literary work that is referred to thereby can be read seamlessly by the user. Therefore, the user's convenience can be improved. In addition, the link destination can be used also as a purchase site of literary works. Thus, even in the case of an electronic document that is formed for the purpose of a private use, the link destination can lead to the purchase of digital literary works. In addition, since links between books that have been scanned by the user can be automatically generated, the user does not need to manage the relation thereof, whereby the efforts of the user can be reduced.

### [Update Process]

While links are generated in documents of the inside of the electronic document as described above, the database needs to be updated at a time when new literary works are added to the literary work databases 22, 32, and 42 (Fig. 1) that are referred to at the time of generating the links or the like. Next, a case will be additionally described in which the database is updated in accordance with the addition of a new literary work thereto or the like.

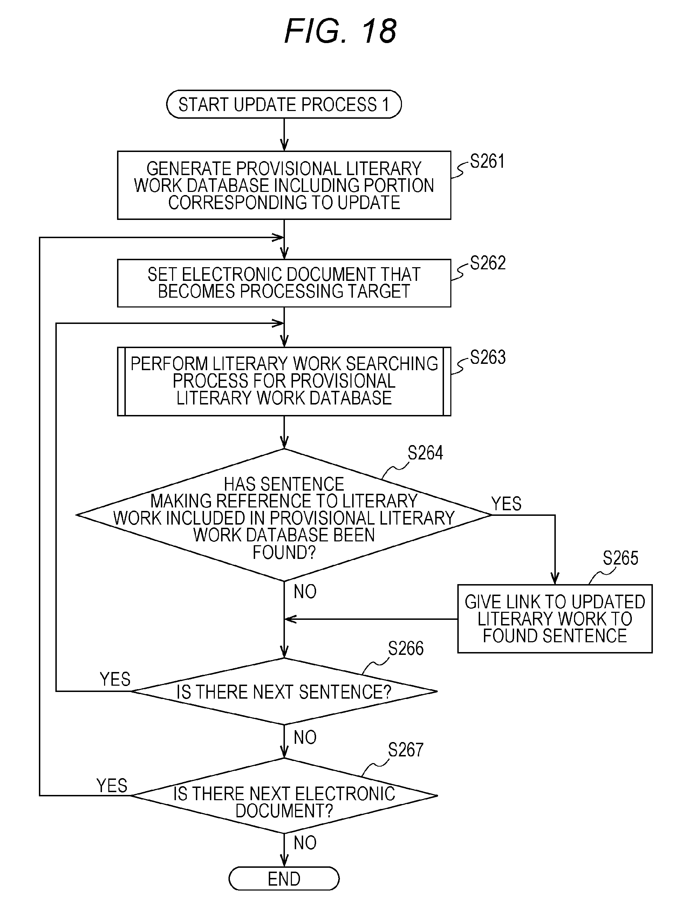

Fig. 18 is a flowchart that illustrates a process performed when the literary work database 32 managed by the electronic document reading terminal 31 is updated. Here, while the description of the process performed when the literary work database 32 is updated will be continued, an update process can be performed in the same manner also when the literary work database 42 of the information terminal 41 is updated. In addition, it may be configured such that the server 21 acquires the literary work database 32 of the electronic document reading terminal 31 or the literary work database 42 of the information terminal 41, and the update process is performed by the server 21.

In Step S261, a provisional literary work database that includes only a portion corresponding to the update is generated. The portion corresponding to the update, for example, is a portion corresponding to an electronic document that is newly purchased and is stored in the electronic document storing unit 33 of the electronic document reading terminal 31, an electronic document that is scanned by the scanner 51 and is formed as the electronic document, and the like.

In Step S262, one electronic document out of a plurality of electronic documents stored in the electronic document storing unit 33 is set as a processing target electronic document. Then, for the set electronic document, the process of Step S263 is performed. In Step S263, a literary work searching process for the provisional literary work database is performed. The literary work searching process for this provisional literary work database is performed based on the process of a flowchart of the literary work searching process illustrated in Fig. 11.

In other words, in the description presented above with reference to the flowchart represented in Fig. 11, while a case has been presented in which the process is performed for the literary work database 32, here, the only difference is that the process is performed for the provisional literary work database, and the basic process is performed in the same manner as that of the above-described case. Thus, since the description is the same, here, duplicate description thereof will not be presented. Since the process of Steps S263 to S266 is the same as the process of Steps S101 to S103 and S108 represented in Fig. 8, here, detailed description thereof will not be presented.

While links are generated in advance in the electronic document that is set as the processing target, any link is not generated for the electronic document that is newly added to the electronic document reading terminal 31, in other words, the electronic document managed by the provisional literary work database. By performing this process, a link is established (the link destination is changed) for the electronic book that has been newly added.

In Step S267, it is determined whether there is a next electronic document in the electronic document storing unit 33. In a case where there is the next electronic document, the process is retuned to Step S262, the next electronic document is set as the processing target, and subsequent processes thereof are repeated. On the other hand, in Step S267, in a case where it is determined that the next electronic document is not present in the electronic document storing unit 33, the update process ends.

Such an update process may be configured to be performed when an electronic document is added, to be performed when a plurality of electronic documents is added, or to be performed regularly at predetermined time intervals.

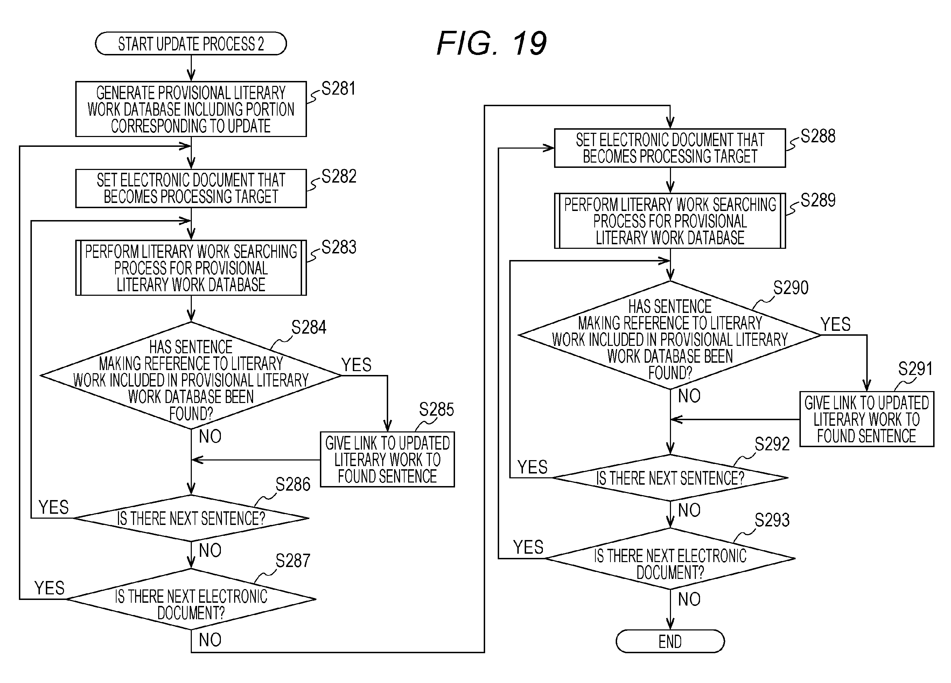

Next, a process performed when the literary work database 22 of the server 21 is updated will be described with reference to the flowchart represented in Fig. 19. The update process is performed by the server 21, for example, at a time when a literary work to be sold to a user is added or the like.

A case will be described as an example in which the server 21 manages the information relating to electronic books managed, for example, for the purpose of sales or the like by the literary work database 22 and manages the information relating to electronic books managed by the literary work database 32 of the electronic document reading terminal 31 as well. Accordingly, in a case where a literary work is added to the server 21, there are an update process performed for the electronic books stored in the server 21 and an update process performed for electronic documents formed as the electronic documents through scanning or the like on the user side.

First, in Step S281, a provisional literary work database including only a portion corresponding to the update is generated. Then, for the provisional literary work database, the process of Step S282 and subsequent steps is performed.

Through the process of Steps S282 to S287, the update process for electronic documents formed as the electronic documents through scanning or the like on the user side is performed. This process is performed in the same manner as the process of the flowchart represented in Fig. 18. In other words, while the process of the flowchart represented in Fig. 18 has been described to be performed by the electronic document reading terminal 31, the process of Steps S282 to S287 is performed by the side of the server 21, which is different from the above-described process. By performing the process of Steps S282 to S287, for the electronic document that has been newly added to the server 21 side, a link from the electronic book managed by the side of the electronic document reading terminal 31 is newly generated.

The process of Steps S288 to S293 is a process for generating a link for the newly added literary work for the electronic documents managed by the server 21. In this process, the processing targets are the electronic documents managed by the server 21, this process is basically performed in the same manner as that of the above-described except that the process is performed for the provisional literary work database, and thus, the description thereof will not be presented.

In this way, by performing the update process, a link can be generated also for the newly added electronic document, and accordingly, the user's convenience can be improved.

### [Recording Medium]

A series of the processes described above may be performed either by hardware or software. In a case where the series of the processes is performed by software, a program configuring the software is installed to a computer. Here, examples of the computer include a computer that is built in dedicated hardware and a computer such as a general-purpose personal computer that can perform various functions by installing various programs.

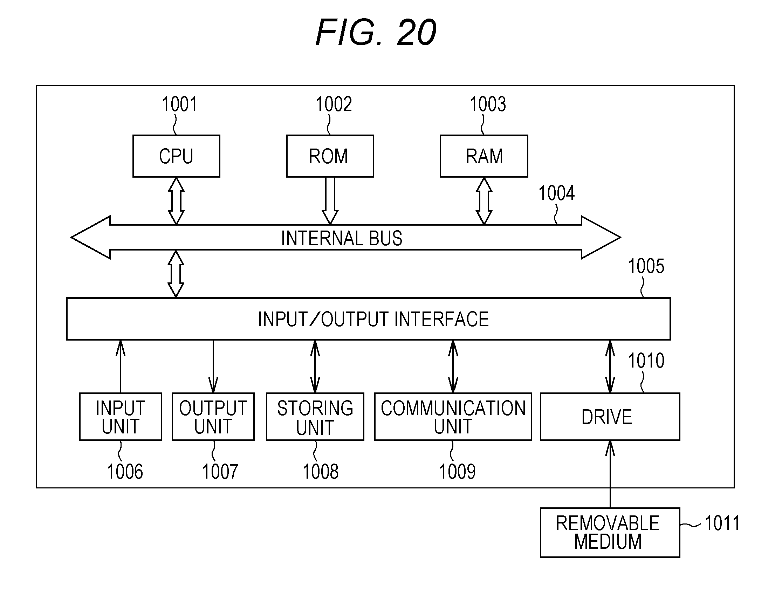

Fig. 20 is a block diagram that illustrates an example of the configuration of the hardware of a computer performing the series of processes described above by using a program. The server 21, the electronic document reading terminal 31, and the information terminal 41 described above may basically have the same configuration as that of the computer illustrated in Fig. 20.

In the computer, a central processing unit (CPU) 1001, read only memory (ROM) 1002, and random access memory (RAM) 1003 are interconnected through a bus 1004. In addition, an input/output interface 1005 is connected to the bus 1004. An input unit 1006, an output unit 1007, a storing unit 1008, a communication unit 1009, and a drive 1010 are connected to the input/output interface 1005.

The input unit 1006 is configured by a keyboard, a mouse, a microphone, and the like. The output unit 1007 is configured by a display, a speaker, and the like. The storing unit 1008 is configured by a hard disk, nonvolatile memory, and the like. The communication unit 1009 is configured by a network interface and the like. The drive 1010 drives a removable medium 1011 such as a magnetic disk, an optical disc, a magneto-optical disk, or a semiconductor memory.

In the computer configured as above, the CPU 1001, for example, loads a program stored in the storing unit 1008 into the RAM 1003 through the input/output interface 1005 and the bus 1004 and executes the program, thereby performing the above-described series of processes.

The program executed by the computer (CPU 1001), for example, may be provided by being recorded on a removable medium 1011 as a package medium or the like. In addition, the program may be provided through a wired or wireless transmission medium such as a local area network, the Internet, or a digital satellite broadcast.

In the computer, by loading a removable medium 1011 into the drive 1010, the program may be installed to the storing unit 1008 through the input/output interface 1005. In addition, the program may be received by the communication unit 1009 through the wired or wireless transmission medium and be installed to the storing unit 1008. Alternatively, the program may be installed to the ROM 1002 or the storing unit 1008 in advance.

For example, in a case where the process of the flowchart represented in Fig. 8 is performed by the electronic document reading terminal 31 and in a case where the electronic document reading terminal 31 has the configuration illustrated in Fig. 20, the program may be implemented as a program that is executed by the CPU 1001.

The program executed by the computer may be a program that performs the process in a time series in accordance with the sequence described in this specification or a program that performs the process in a parallel manner or at necessary timing such as timing when being called.

In this specification, a system represents the whole apparatus that is configured by a plurality of apparatuses.

Embodiments of the present technology are not limited to the above-described embodiments, and various changes may be made therein in the range not departing from the concept of the present technology.

In addition, the present technology may have the configuration as described below.

(1)
   There is provided an information processing apparatus including: a storing unit that stores information of an electronic document; an extraction unit that extracts a sentence including the information stored in the storing unit from a predetermined electronic document; and a generation unit that generates a link to the information stored in the storing unit from the sentence extracted by the extraction unit.
(2)
   There is provided the information processing apparatus described in (1) described above, in which the storing unit includes a first storing unit in which the information of the electronic document stored in the same terminal is stored and a second storing unit in which the information of the electronic document stored in the other terminal is stored, and the extraction unit extracts a sentence including the information stored in the first storing unit from a predetermined electronic document and extracts a sentence including the information stored in the second storing unit from a predetermined electronic document.
(3)
   There is provided the information processing apparatus described in (1) or (2) described above, in which the electronic document is acquired by digitizing a document that is printed on a paper medium.
(4)
   There is provided the information processing apparatus described in any of (1) to (3) described above, in which the extraction unit calculates a first degree of similarity between a predetermined sentence included inside the electronic document and the information stored in the storing unit, the extraction unit calculates a second degree of similarity between a sentence acquired by combining the predetermined sentence and a sentence next to the predetermined sentence and the information stored in the storing unit, the extraction unit repeatedly performs the combining of sentences and the calculating of the degree of similarity until the second degree of similarity is determined to be higher than the first degree of similarity, and the extraction unit sets the sentence before the combination as an extraction result when the second degree of similarity is determined to be lower than the first degree of similarity.
(5)
   There is provided the information processing apparatus described in any of (1) to (4) described above, in which the extraction unit further extracts a number making reference to the extracted sentence from the predetermined electronic document, and the generation unit gives a link generated for the sentence that is referred to by the number to the number extracted by the extraction unit.
(6)
   There is provided the information processing apparatus described in any of (1) to (5) described above, in which an update process is performed by extracting a sentence including updated information from the predetermined electronic document in a case where storing unit is updated.
(7)
   There is provided an information processing method using an information processing apparatus equipped with a storing unit that stores information of an electronic document. The information processing method includes: extracting a sentence including the information stored in the storing unit from a predetermined electronic document; and generating a link to the information stored in the storing unit from the extracted sentence.
(8)
   There is provided a computer-readable program causing a computer that controls an information processing apparatus equipped with a storing unit storing information of an electronic document to perform: extracting a sentence including the information stored in the storing unit from a predetermined electronic document; and generating a link to the information stored in the storing unit from the extracted sentence.

### REFERENCE SIGNS LIST

- 11: Network
- 21: Server
- 22: Literary Work database
- 23: Customer database
- 31: Electronic document reading terminal
- 32: Literary Work database
- 33: Electronic document storing unit
- 41: Information terminal
- 42: Literary Work database
- 43: Electronic document storing unit
- 51: Scanner
- 61: Document

## Claims

1. An information processing apparatus comprising:
a storing unit that stores information of an electronic document;
an extraction unit that extracts a sentence including the information stored in the storing unit from a predetermined electronic document; and
a generation unit that generates a link to the information stored in the storing unit from the sentence extracted by the extraction unit.

2. The information processing apparatus according to claim 1,
wherein the storing unit includes a first storing unit in which the information of the electronic document stored in the same terminal is stored and a second storing unit in which the information of the electronic document stored in the other terminal is stored, and
the extraction unit extracts a sentence including the information stored in the first storing unit from a predetermined electronic document and extracts a sentence including the information stored in the second storing unit from a predetermined electronic document.

3. The information processing apparatus according to claim 1, wherein the electronic document is acquired by digitizing a document that is printed on a paper medium.

4. The information processing apparatus according to claim 1,
wherein the extraction unit calculates a first degree of similarity between a predetermined sentence included inside the electronic document and the information stored in the storing unit,
calculates a second degree of similarity between a sentence acquired by combining the predetermined sentence and a sentence next to the predetermined sentence and the information stored in the storing unit,
repeatedly performs the combining of sentences and the calculating of the degree of similarity until the second degree of similarity is determined to be higher than the first degree of similarity, and
sets the sentence before the combination as an extraction result when the second degree of similarity is determined to be lower than the first degree of similarity.

5. The information processing apparatus according to claim 1,
wherein the extraction unit further extracts a number making reference to the extracted sentence from the predetermined electronic document, and
the generation unit gives the link generated for the sentence that is referred to by the number to the number extracted by the extraction unit.

6. The information processing apparatus according to claim 1, wherein an update process is performed by extracting a sentence including updated information from the predetermined electronic document in a case where storing unit is updated.

7. An information processing method using an information processing apparatus equipped with a storing unit that stores information of an electronic document, the information processing method comprising:
extracting a sentence including the information stored in the storing unit from a predetermined electronic document; and
generating a link to the information stored in the storing unit from the extracted sentence.

8. A computer-readable program causing a computer that controls an information processing apparatus equipped with a storing unit storing information of an electronic document to perform:
extracting a sentence including the information stored in the storing unit from a predetermined electronic document; and
generating a link to the information stored in the storing unit from the extracted sentence.
